# EUROPÄISCHE PATENTSCHRIFT

(11) **EP 1 690 480 B1**
(45) Veröffentlichungstag und Bekanntmachung des Hinweises auf die Patenterteilung: **26.08.2009**
(21) Anmeldenummer: 05026895.2
(22) Anmeldetag: 08.12.2005
(51) Int. Cl.: A47J 31/40

(54) **Kaffeebrühvorrichtung mit Ringsteg**
Brewing device with ring bar
Dispositif d'infusion avec une barre annulaire

(30) Priorität: 11.02.2005 DE 202005002227 U
(43) Veröffentlichungstag der Anmeldung: 16.08.2006
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(56) Entgegenhaltungen:
- EP-A- 0 710 462
- EP-A- 1 502 529

## Beschreibung

Die vorliegende Erfindung betrifft eine Brühvorrichtung für die Kaffeezubereitung, insbesondere Niederdruckkaffeemaschine, mit einer einen oberen und einen unteren Brühkammerteil aufweisenden, öffen- und schließbaren Brühkammer zum Aufnehmen eines Kaffeepads mit Siegelrand und einem Brühwassereinlass am oberen Brühkammerteil, wobei die mit einer Kaffeepad-Oberseite in Berührung bringbare Unterseite des oberen Brühkammerteils und eine von einer ringförmig am unteren Brühkammerteil umlaufenden Siegelrand-Auflagefläche aufgespannte Ebene im geschlossenen Zustand der Brühkammer einen senkrechten Abstand A voneinander aufweisen, der kleiner ist als 5 mm.

Eine solche Brühvorrichtung ist z.B. aus der EP 0904717 A1 bekannt. Derartige Niederdruckkaffeemaschinen arbeiten bevorzugt bei einem Brühdruck von 1,4 bis 2,0 bar und erfordem daher, dass mit einer entsprechend schließbaren Brühkammer gearbeitet wird. Des Weiteren werden die Kaffeeportionen in Form sogenannter Kaffeepads bereitgestellt. Die Kaffeepads bestehen aus einer oberen und unteren Filterpapierlage, die an ihren Außenkanten als miteinander verklebter Siegelrand ausgeformt sind. Der dazwischen liegende Abschnitt ist mit gemahlenem Kaffeepulver gefüllt. Üblicherweise verfügt das untere Brühkammerteil über eine topfförmige Aufnahme, in die das Kaffeepad so hineingelegt werden soll, dass der Siegelrand auf einer Siegelrand-Auflagefläche, die die topfförmige Vertiefung umgibt, zu liegen kommt. Je nach Ausführung der Vorrichtung erfolgt dann die Abdichtung im Bereich des Siegelrandes oder außerhalb der Brühkammer durch eine separate Dichtung. Ein Problem, das auch in der oben erwähnten Druckschrift angesprochen ist, ist die Verhinderung eines Bypasses, der unvorteilhafterweise zu einer Verwässerung des Kaffeeextraktes führen wird. So sind bei der bekannten Vorrichtung Maßnahmen im unteren Brühkammerteil ergriffen.

Darüber hinaus sind z.B. aus der US 3561349 Maßnahmen bei drucklos arbeitenden Kaffeemaschinen bekannt, bei denen durch das Aufquellen der Kaffeepads eine Abdichtung erfolgen soll. Hierzu sei auch die EP 0294700 A2 angeführt, bei der ein Abstand des Oberteils zum Kaffeepad vor dem Aufbrühvorgang gewollt ist.

Hiervon unterscheidet sich eine Niederdruckkaffeemaschine dadurch, dass die Brühkammer zur Erzeugung des gewünschten Betriebsdruckes geschlossen sein muss. Des Weiteren wird das Kaffeepad in der Brühkammer so angeordnet, dass das obere Brühkammerteil unmittelbar an dem Kaffeepad anliegt. Aufgrund der handelsüblichen Kaffeepadgrößen ist dies durch den Abstand A von kleiner als 5 mm sichergestellt. Die Bestrebungen gehen nunmehr dahin, die Extraktion noch weiter zu verbessern.

Es ist daher eine Aufgabe der vorliegenden Erfindung, eine Brühvorrichtung der eingangs genannten Art hinsichtlich einer günstigeren Durchdringung des Kaffeepads mittels das Brühwasser zu verbessern.

Hierzu ist erfindungsgemäß vorgesehen, dass ein über die Unterseite des oberen Brühkammerteils vorstehender, in die Brühkammer hineinragender Ringsteg vorgesehen ist, der Brühwassereinlass in dem vom Ringsteg umschlossenen Bereich der Unterseite des oberen Brühkammerteils angeordnet ist und der Ringsteg eine über die Unterseite vorstehende Höhe von mindestens 30 % des Abstandes A aufweist.

Zwar ist aus der EP 0710462 B1 bereits die Verwendung eines im Querschnitt kreisförmigen Vorsprungs beschrieben. Aufgrund der Ausgestaltung ist jedoch dort noch die Maßnahme enthalten, dass der Bereich zwischen Vorsprung und Dichtungsebene optimal an die Form des Pads angepasst ist, um die Wirkung des Steges zu unterstützen. Im Gegensatz hierzu kommt die Erfindung auch mit der Verwendung von sogenannten weichen Kaffeepads sehr gut zurecht. Die vorgegebene Eindringtiefe ist derartig gewählt, dass das einlaufende Brühwasser durch den Ringsteg nach unten abgelenkt und besser in das weiche Kaffeepad hineingeleitet wird. Insbesondere harte Kaffeepads, wie sie für die Verwendung bei einer Niederdruckkaffeemaschine nicht in Frage kommen, können mit einem derartig ausgestalteten Ringsteg nicht zusammenwirken, ohne dass diese beschädigt werden. Darüber hinaus hat der hier gewählte Ringsteg auch noch einen weiteren Vorteil. Nachdem es auf eine formgenaue Anpassung des Kaffeepads außerhalb des Ringsteges an das obere Brühkammerteil nicht ankommt, können auch Kaffeepads mit eigentlich für die Brühkammer zu kleinen Durchmessern verwendet werden, solange der Ringsteg noch auf diese aufdrückbar ist. Darüber hinaus gibt es auch bei den weichen Kaffeepads Hersteller, die einigermaßen formstabile Kaffeepads bereitstellen und einige Hersteller, die weniger formstabile Kaffeepads bereitstellen. Gerade die weniger formstabilen Kaffeepads können zu einer unzureichenden Extraktion führen. Auch hier hilft die erfindungsgemäß vorgesehene Geometrie des Ringsteges, eine bessere Brühwassereinleitung herbeizuführen, selbst wenn ein weniger formstabiles Kaffeepad nicht optimal in der Brühkammer, insbesondere im unteren Brühkammerteil, angeordnet ist.

Obwohl es bei den meisten Ausführungsformen vorgesehen sein wird, dass der Ringsteg ohne jegliche Unterbrechung umläuft, ist es durchaus denkbar, kleinere Unterbrechungen vorzusehen, die nicht zu größeren Durchströmverlusten von Brühwasser führen. Auch ist es denkbar, einen zweiten äußeren Ringsteg oder Ringstegsegmente anzuordnen, die dann die Lücken des inneren Ringsteges abdecken.

Bevorzugt kann der Ringsteg einen Innendurchmesser aufweisen, der mindestens 75 % des Innendurchmessers der Siegelrandauflagefläche beträgt. Hierdurch werden die meisten handelsüblichen weichen Kaffeepads abgedeckt, ohne dass weitere Abdichtungsmaßnahmen zwischen Siegelrand und dem Ringsteg wie bei der EP 0710462 B1 erfolgen müssen.

In einer weiteren Ausführungsform kann zwischen dem Ringsteg und dem Brühwassereinlass die Unterseite des oberen Brühkammerteils von einer umlaufenden, im Wesentlichen ebenen Andrückfläche zur im Wesentlichen flachen Anlage an ein Kaffeepad ausgebildet sein. Die EP 0710462 B1 verzichtet auf eine solche Maßnahme gänzlich. Bei der erfindungsgemäßen Ausführungsform wird bereits vor dem Ringsteg durch die flache Anlage des Kaffeepads an das entsprechend mit der Andrückfläche ausgestaltete obere Brühkammerteil eine Abdichtung geschaffen, die selbst bereits für eine Verringerung eines Bypasses entlang der Oberseite des Kaffeepads sorgt. Hierdurch wird bereits beim Einlass des Brühwassers in die Brühkammer unmittelbar um den Brühwassereinlass herum abgedichtet. Durch den sich einstellenden Betriebsdruck ist dann zusätzlich noch die Wirkung des Ringstegs erforderlich. Der Vollständigkeit halber sei hier erwähnt, dass die Andrückfläche auch Profilierungen, insbesondere Vertiefungen, wie z.B. zur Aufnahme einer Auswurffeder, aufweisen kann, solange hauptsächlich ebene abdichtende Flächenabschnitte verbleiben.

Besonders vorteilhaft kann es sein, wenn die Andrückfläche im Wesentlichen parallel zu der von der ringförmigen am unteren Brückenkammerteil umlaufenden Siegelrandauflagefläche aufgespannten Ebene angeordnet ist. Damit wird erreicht, dass das Kaffeepad direkt an der Andrückfläche der Brühkammer anliegt und das Wasser direkt nach dem Eintritt in die Brühkammer in das Kaffeepad fließen muss. Somit kann verhindert werden, dass das Wasser auf der Oberfläche des Kaffeepads bis zum Ringsteg fließt und erst dort ins Innere des Kaffeepads gelenkt wird.

Um eine möglichst große Dichtfläche zwischen Kaffeepad und oberem Brühkammerteil zu erzeugen, kann bevorzugt die Andrückfläche eine Breite von mindestens 20 % des Innendurchmessers des Ringsteges aufweisen. Es handelt sich demnach um eine relativ großflächige Anlage, die gegenüber dem einströmenden Brühwasser einen relativ hohen Strömungswiderstand bietet, so dass das Wasser in das Kaffeepad hineinfließt.

Gemäß einer weiteren Variante ist vorgesehen, dass an der Unterseite des oberen Brühkammerteils zwischen dem Ringsteg und dem Brühwassereinlass mindestens ein weiterer zu dem Ringsteg konzentrischer innerer Ringsteg ausgebildet ist. Dadurch sind mehrere Strömungshindernisse an der Oberseite der Brühkammer ausgebildet, wodurch ein Bypasseffekt effektiv vermieden werden kann.

Vorteilhaft ist es, wenn die über die Unterseite des oberen Brühkammerteils vorstehende Höhe der Ringstege mit zunehmenden Abstand der Ringstege vom Brühwassereinlass zunimmt. Auf diese Art ist eine besonders effektive Vermeidung des Bypasseffekts möglich, da das Brühwasser stufenweise durch jeden der Stege weiter ins Innere des Kaffeepads geleitet wird.

Wenn zumindest der am weitesten vom Brühwassereinlass entfernte Ringsteg ohne Unterbrechung verläuft, wird verhindert, dass das Brühwasser durch Einschnitte in den Ringstegen an der Oberfläche des Kaffeepads entlang läuft und zu einer schlechteren Extraktion führt.

In einer Variante ist vorgesehen, dass zumindest die inneren Ringstege Vertiefungen aufweisen. Diese Vertiefungen dienen zur Aufnahme der Federarme einer Kaffeepad-Auswurffeder im geschlossenen Zustand der Brühkammer.

Bevorzugt nimmt das Verhältnis zwischen der Tiefe der Vertiefungen in den Ringstegen und der Höhe der jeweiligen Ringstege mit zunehmenden Abstand der Ringstege vom Brühwassereinlass ab. Dadurch ist eine optimierte Aufnahme der Federarme möglich.

Gemäß einer weiteren Ausführungsform ist vorgesehen, dass die Brühkammer zum Aufnehmen des Kaffeepads im Wesentlichen rechteckförmig mit nach Außen gewölbten Seiten ausgestaltet ist. In dieser Ausführungsform können rechteckförmige Kaffeepads in die Brühkammer eingelegt werden.

Damit im oberen Randabschnitt querfließendes Brühwasser in das Innere des Kaffeepads umgelenkt wird, weisen die Ringstege bevorzugt eine Innenseite auf, die im Wesentlichen senkrecht zu Unterseite des oberen Brühkammerteils verläuft. Querlaufendes Brühwasser trifft mit einigem Impuls auf diese Innenseite auf und wird dann entsprechend umgelenkt und durch das Innere des Kaffeepads geleitet. Durch die vorgegebene Höhe des Ringstegs ist dabei die Eindringtiefe aufgrund dieser Strömungsbarriere schon relativ hoch.

Des Weiteren kann eine Innenkante der Andrückfläche mit einem im Wesentlichen umlaufenden, nach unten über die Unterseite des oberen Brühkammerteils vorstehenden Begrenzungssteg versehen sein. Das ausströmende Brühwasser muss also bereits eine erste Barriere überwinden und ist demnach gezwungen, erst einmal über einen bestimmten Bereich in das Kaffeepad einzudringen. Es ist allerdings nicht erforderlich, dass dieser Begrenzungssteg die vorgegebene Höhe des Ringstegs aufweist.

Günstig ist es hierbei, wenn gemäß einer Variante der Begrenzungssteg den Brühwassereinlass umgibt, so dass das Brühwasser möglichst mittig und schon einigermaßen tief in das Kaffeepad überhaupt hineinfließt.

Des Weiteren kann vorgesehen sein, dass der Brühwassereinlauf als Ringspalt ausgestaltet ist. Hierdurch kann ein Einfließen in das Kaffeepad über einen größeren Strömungsquerschnitt erfolgen. Auch lässt sich durch eine solche Ausgestaltung der Einströmbereich relativ groß ausführen. Eine Aufteilung in mehrere, insbesondere voneinander getrennte, Ringspaltabschnitte ist möglich.

Dabei kann der obere Brühkammerteil als Bestandteil des Brühwasserauslaufs eine topfförmige Vertiefung aufweisen, deren mittlerer Bereich zum Ausbilden des Ringspalts von einem scheibenförmigen Befestigungsteil einer Kaffeepad-Auswurffeder abgedeckt ist. Zwei im Wesentlichen notwendige Elemente (Brühkammeroberteil und Auswurffeder) ergänzen sich hier zu einer funktionellen Einheit zur Ausgestaltung eines vorteilhaften Brühwassereinlasses. Die Vertiefung im Brühkammeroberteil lässt sich fertigungstechnisch sehr einfach herstellen. Gleiches gilt für die Auswurffeder, die im vorliegenden Ausführungsbeispiel auch noch die Funktion eines Deckels übemimmt.

Günstig ist es hierbei, wenn eine Einlassöffnung für Brühwasser in den vom scheibenförmigen Befestigungsteil abgedeckten Teil in die topfförmige Vertiefung mündet. Das Brühwasser verteilt sich dann erst radial in der Vertiefung, wird umgeleitet und fließt dann durch den Ringspalt in die Brühkammer.

Gemäß einer Variante ist vorgesehen, dass die Ringstege im Querschnitt im Wesentlichen sägezahnförmig mit abgerundeter Spitze ausgebildet sind. Durch die Innenseite der Ringstege wird somit eine Strömungsumkehr des Brühwassers erzielt, durch die ausgewählte Form der Ringstege wird aber auch gleichzeitig vermieden, dass das Kaffeepad übermäßig beansprucht wird. Die abgerundete Spitze führt zu einer Schonung des Kaffeepads und vermeidet ein Aufreißen der Papierumhüllung des Kaffeepads.

Besonders bevorzugt ist es, wenn die Ringstege eine Außenseite mit einer im Wesentlichen abgerundeten Form aufweisen. Diese Form trägt weiter zu einer Schonung der Kaffeepads bei und vermindert die Gefahr einer Zerstörung der Kaffeepads durch die Ringstege.

Wird der Übergang zwischen der Andrückfläche und dem Ringsteg im Wesentlichen scharfkantig ausgebildet, so wird durch diese scharfe Kante die Strömung des Brühwassers abrupt abgelenkt. Es kann vermieden werden, dass das Brühwasser an dem Ringsteg entlang nach außen strömt und somit einen Bypasseffekt bewirkt.

Dieser Bypasseffekt kann weiter verhindert werden, wenn die Strömung des Brühwassers durch den vorstehenden Andrücksteg, die flache Andrückfläche und den senkrecht zur Andrückfläche verlaufenden Ringsteg ins Innere des Kaffeepads gerichtet ist.

Des Weiteren bezieht sich die Erfindung auf eine Brühvorrichtung für die Kaffeezubereitung gemäß dem Oberbegriff von Anspruch 24, insbesondere Niederdruckkaffeemaschine, mit einer einen oberen und einen unteren Brühkammerteil aufweisenden, öffnen- und schließbaren Brühkammer, einem in der Brühkammer aufgenommenen Kaffeepad mit Siegelrand und einem Brühwassereinlass am oberen Brühkammerteil, wobei die mit der Kaffeepadoberseite in Berührung stehende Unterseite des oberen Brühkammerteils und eine von einer ringförmig am unteren Brühkammerteil umlaufenden Siegelrand-Auflagefläche aufgespannten Ebene im geschlossenen Zustand der Brühkammer einen senkrechten Abstand A voneinander aufweisen, der kleiner ist als 5mm. Gemäß dem kennzeichnenden Teil von Anspruch 24 ist ein über die Unterseite des oberen Brühkammerteils vorstehender, in die Brühkammer hineinragender und in das Kaffeepad hineindrückender Ringsteg vorgesehen und der Brühwassereinlass in den vom Ringsteg umschlossenen Bereich der Unterseite des oberen Brühkammerteils angeordnet, wobei der Ringsteg eine über die Unterseite vorstehende Höhe und somit Eindringtiefe in das Kaffeepad von mindestens 30 % des Abstandes A aufweist.

Im Folgenden werden Ausführungsbeispiele der vorliegenden Erfindung anhand einer Zeichnung näher erläutert. Es zeigen:
- Fig. 1: ein Brühkammeroberteil in einer perspektivischen Darstellung,
- Fig. 2: das Brühkammeroberteil aus Fig. 1 im Vollschnitt mit darunter angeordnetem Brühkammerunterteil und eingelegtem Kaffeepad (jeweils im Vollschnitt),
- Fig. 3: eine perspektivische Unteransicht des Brühkammeroberteils, wobei die Auswurffeder weggelassen ist,
- Fig. 4: eine weitere Ausführungsform eines Brühkammeroberteils ohne Auswurffeder in perspektivischer Darstellung und
- Fig. 5: Draufsicht auf ein Brühkammerunterteil der Ausführungsform aus Fig. 4.

Im Folgenden wird sich auf die Kaffeemaschine KM 30 der Petra-Electric Peter Hohlfeldt GmbH & Co. KG bezogen. Aus diesem Grunde wird sich im Nachfolgenden im Wesentlichen auf Neuerungen bezogen.

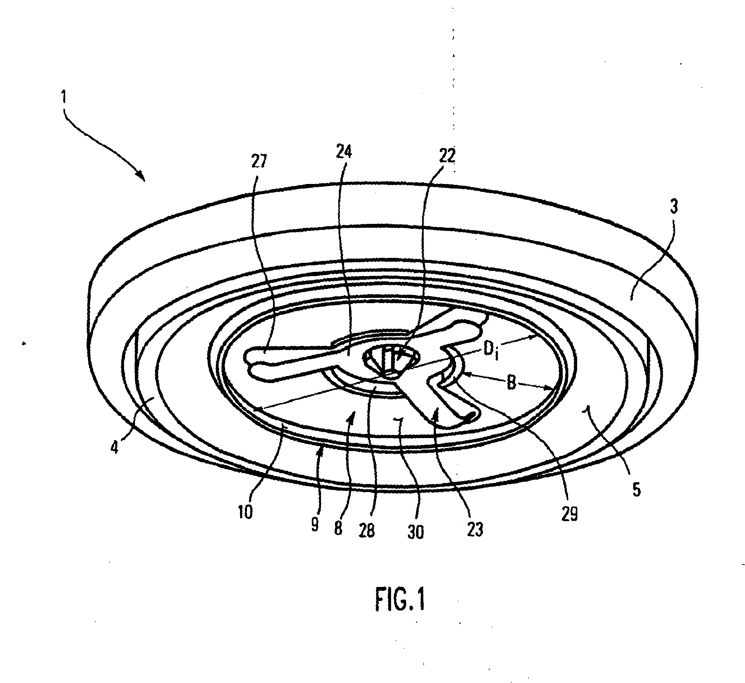

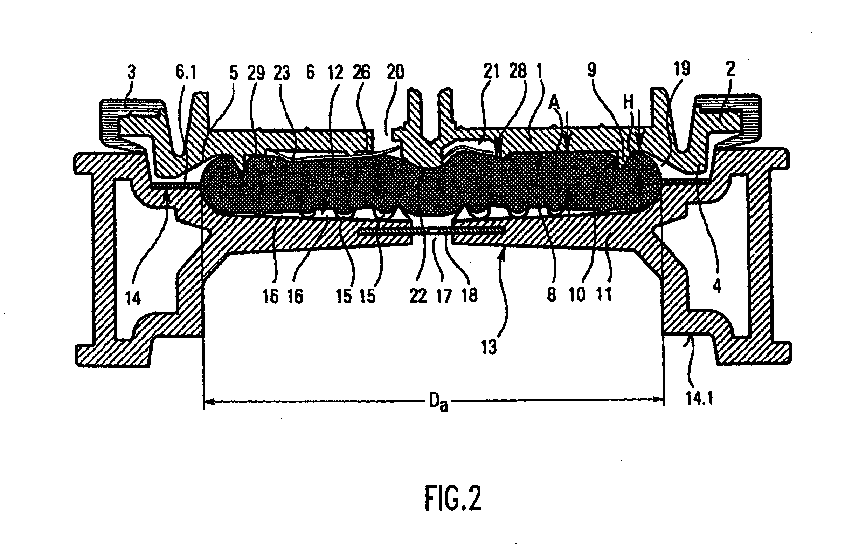

In Fig. 1 ist das Brühkammeroberteil 1 dargestellt, welches auch im Querschnitt in Fig. 2 zu sehen ist. Am Außenrand 2 des Brühkammeroberteils 1 ist eine umlaufende Lippendichtung 3 angeordnet. An den Außenrand 2 schließt sich ein nach unten vorstehender umlaufender Wulst 4 an, dessen Funktion hauptsächlich in einer Volumenverdrängung zu sehen ist, damit sich in diesem Bereich nicht zu viel Brühwasser ansammeln kann.

Dieser Wulst 4 schließt sich mittels eines konischen Übergangs 5 an die eigentliche mit dem Kaffeepad 6 in Berührung kommende Unterseite 8 des Brühkammeroberteils 1 an. Über diese Unterseite 8 steht ein nach unten vorragender Ringsteg 9 über, der im Querschnitt eine Sägezahnform mit abgeflachter Spitze aufweist. Eine Innenfläche 10 des Ringstegs 9 ist senkrecht zur Unterseite 8 ausgerichtet.

In Fig. 2 ist zu erkennen, dass das Brühkammerunterteil 11 in Form einer Wendeschublade ausgestaltet ist. In der in Fig. 2 gezeigten Stellung ist die Oberseite mit einer Vertiefung 12 zur Aufnahme eines einzelnen Kaffeepads 6 versehen. Auf der Unterseite befindet sich eine Vertiefung 13, die zur Aufnahme von zwei übereinander liegenden Kaffeepads 6 geeignet ist.

An die Vertiefung 12 auf der Oberseite des Brühkammerunterteils 11 schließt sich seitlich eine Siegelrand-Auflagefläche 14 an, die ringförmig umläuft und auf der ein Siegelrand 6.1 des Kaffeepads 6 aufliegt. Die Vertiefung 12 ist mit Nuten 15 und Stegen 16 versehen, die einen Ablauf des Kaffeeextrakts zur zentralen Öffnung 17 mit Düsenplatte 18 begünstigen. Die Düsenplatte 18 weist eine zentrale, kleine Düsenöffnung auf.

Das Brühkammeroberteil 1 kann durch einen hier nicht näher zu beschreibenden Mechanismus nach oben, von einer Öffnungsstellung in die in Fig. 2 gezeigte geschlossene Stellung verfahren werden. Das Brühkammerunterteil 11 lässt sich bei hochgefahrenem Brühkammeroberteil 1 senkrecht zur Bildebene der Fig. 2 zum Einlegen und Austauschen eines Kaffeepads 6 herausziehen oder hereinschieben.

Die Unterseite des Brühkammerunterteils 11 weist ebenfalls eine an die Vertiefung 13 anschließende Siegelrand-Auflagefläche 14.1 auf.

Die Unterseite 8 und die Siegelrand-Auflagefläche 14 weisen im geschlossenen Zustand der Brühkammer einen senkrechten Abstand A von ca. 3,7 mm zueinander auf. Eine Höhe H des Ringstegs 9 bzw. dessen Überstand über die Unterseite 8 beträgt mindestens 30 % des Abstandes A, bevorzugt sogar über 40%. Im vorliegenden Fall sind es ca. 46 % und somit 1,7 mm.

Der Innendurchmesser Dᵢ (siehe Fig. 1) beträgt mindestens 75 % des Innendurchmessers Dₐ der Siegelrand-Auflagefläche 14. Im vorliegenden Fall beträgt daher Dᵢ = 47 mm. Der Durchmesser Dₐ beträgt im vorliegenden Fall 58 mm.

Des Weiteren ist aus Fig. 2 zu erkennen, dass sich außerhalb des Ringstegs 9 ein ebener Abschnitt der Unterseite anschließt und dann erst der konische Übergang 5 angeformt ist. Hierdurch wird in diesem Bereich eine Angleichung an das Kaffeepad 6 vermieden. Insbesondere soll der Wulst nicht in Kontakt mit dem Kaffeepad 6 geraten. Es entsteht quasi eine sich radial bis über den Siegelrand 6.1 hinaus ausdehnende Kammer 19. Dies kann insbesondere bei dem Einlegen verkrumpelter Kaffeepads von Vorteil sein.

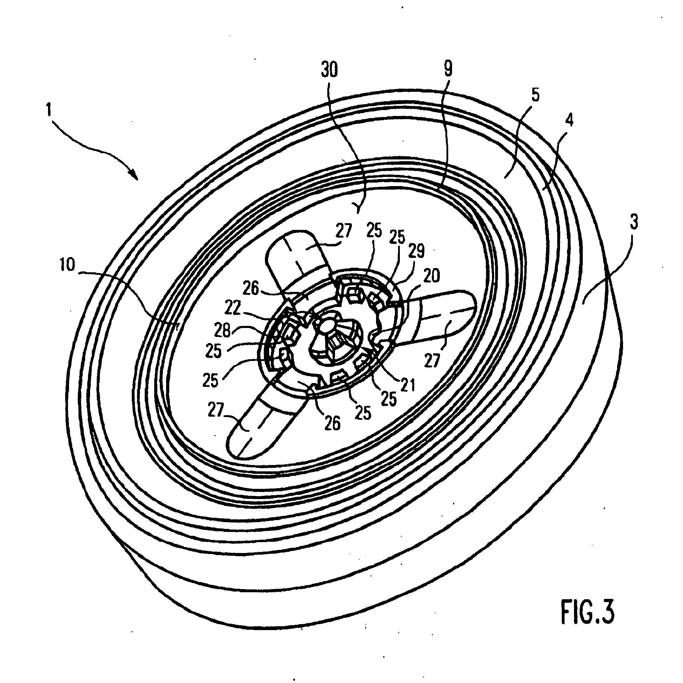

Anhand von Fig. 3 ist nunmehr zu erkennen, dass das Brühkammeroberteil 1 über eine Einlassöffnung 20 verfügt, die in eine topfförmige Vertiefung 21 mündet. Mittig in der topfförmigen Vertiefung 21 ist ein Befestigungsstift 22 angeordnet, der zum Anbringen einer Auswurffeder 23 mit einer zentral angeordneten Befestigungsscheibe 24 dient. Die Auswurffeder 23 ist ein einteilig aus einem Blech hergestelltes Stanzbiegeteil, das auf dem speziell ausgeformten Befestigungsstift 22 verankert und verdrehsicher angebracht ist.

In der topfförmigen Vertiefung 21 sind Auflagevorsprünge 25 und 26 in etwa ringförmig angeordnet. Den größeren Vorsprüngen 26 sind jeweils Vertiefungen 27 zugeordnet, die zur Aufnahme der im geschlossenen Brühkammerzustand angefederten Federarme der Auswurffeder 23 dienen. Die Befestigungsscheibe 24 ist nunmehr so geformt, dass sie auf den Auflagevorsprüngen 25 und 26 aufliegt und mit ihrem Außenrand am Außenrand der Auflagenvorsprünge 25 bündig abschließt. Hierdurch erhält die topfförmige Vertiefung 21 quasi einen diese teilweise verschließenden Deckel, so dass außerhalb noch ein Ringspalt 28 gebildet ist, der lediglich von den Vorsprüngen 26 unterbrochen ist. Es entstehen somit drei kreisringsegmentförmige Auslässe, die gemeinsam quasi als Ringspalt 28 bezeichnet werden können. Die Einlassöffnung 20 ist so gewählt, dass das Brühwasser erst von unten die Befestigungsscheibe 24 anströmt, sich seitlich verteilt und über die Zwischenräume zwischen den Auflagevorsprüngen 25 in den Ringspalt 28 hineinfließt (bzw. Ringspaltabschnitte).

Die topfförmige Vertiefung 21 ist von einem ringförmigen Andrücksteg 29 umgeben. Der Andrücksteg 29 ist annähernd umlaufend und wird nur durch die Vertiefung 27 unterbrochen.

Außerhalb des Andrückstegs 29 bis zur Innenfläche 10 des Ringstegs 9 befindet sich eine im Wesentlichen ringförmige Andrückfläche 30. Die Andrückfläche 30 weist lediglich die Vertiefung 27, ansonsten aber keine Erhöhung oder Vertiefungen auf. Hierdurch wird eine großflächige Anlage an der Oberseite des Kaffeepads 6 erreicht. Die Breite B (siehe Fig. 1) der Andrückfläche 30 beträgt mindestens 20 % des Innendurchmessers Dᵢ des Ringstegs 9. Im vorliegenden Fall beträgt B ca. 14 mm.

Im Folgenden wird die Wirkungs- und Funktionsweise des oben beschriebenen Ausführungsbeispiels näher erläutert.

Bei hochgefahrenem Brühkammeroberteil 1 wird das Brühkammerunterteil 11 entnommen und ein frisches Kaffeepad 6 eingelegt. Das Kaffeepad 6 befindet sich dann in der Vertiefung 12 des Brühkammerunterteils 11, wobei der Siegelrand 6.1 auf der Siegelrand-Auflagefläche 14 aufliegt. Das Brühkammerunterteil 11 wird dann zusammen mit dem eingelegten Pad in die Maschine eingeschoben und anschließend das Brühkammeroberteil 1 nach unten verfahren. Dabei kommt die Lippendichtung 3 mit einem Außenrand des Brühkammerunterteils 11 dichtend in Berührung.

Die Federarme der Auswurffeder 23 federn dann in die Vertiefung 27 ein und drücken vorgespannt auf die zugehörigen Bereiche des Kaffeepads. Der umlaufende Ringsteg 9 dringt in die Oberfläche des Kaffeepads 6 ein und bildet somit eine Strömungsbarriere. Die Höhe H und die Form des Ringstegs 9 sind so gewählt, dass das Kaffeepad (ein weiches Kaffeepad der zur Zeit sich auf dem Markt befindlichen Kaffeepads für Niederdruckkaffeemaschinen) nicht beschädigt wird. Der Andrücksteg 29 dringt ebenfalls etwas in die Oberseite des Kaffeepads 6 ein und bildet damit eine erste, seitliche Strömungsbarriere für das austretende Brühwasser.

Sobald der Brühvorgang gestartet wird, strömt heißes Brühwasser über die Einlassöffnung 20 in die topfförmige Vertiefung 21 ein und verteilt sich unterhalb der Befestigungsscheibe 24 in dieser. Das Brühwasser strömt radial nach außen in die Ringspaltabschnitte 28, trifft dort auf die Seitenwand und wird senkrecht umgelenkt und trifft quasi als Ringvorhang auf das Kaffeepad 6. Der Betriebsdruck einer Niederdruckkaffeemaschine beträgt in aller Regel zwischen 1,4 und 2 bar. Durch den sich einstellenden Überdruck gelangt Brühwasser nach der Überwindung der ersten Barriere, des Andrückstegs 29, in den Bereich der Andrückfläche 30. Hier bildet sich eine gewisse Abdichtung aufgrund der relativ großen Andrückfläche 30 aus, wodurch Wasser zumindest schon vorteilhaft in den oberflächennahen Bereich des Kaffeepads 6 eindringt. Anschließend trifft randnahes Brühwasser auf die senkrecht stehende Innenfläche 10 des Ringstegs 9 auf und wird abrupt ins Innere des Kaffeepads 6 umgelenkt. Hierdurch entsteht eine sehr gute Extraktion und ein optimierter Durchfluss des Brühwassers durch das Kaffeepad. Der Kaffeeextrakt fließt unterhalb des Kaffeepads 6 über die Nuten 15 zur Öffnung 17 hin ab und schießt durch die Düsenplatte 18 nach unten zur Auslassvorrichtung, die mit einer Cremaeinrichtung ausgestattet ist.

Die Höhe H sowie der Durchmesser Dᵢ des Ringsteges 9 gestatten eine optimierte Durchdringung des Brühwassers. Diese Durchdringung ist auch dann optimiert, wenn Kaffeepads von unterschiedlichen Herstellern mit unterschiedlichen Durchmessern eingesetzt werden. Es muss lediglich sichergestellt werden, dass der Außendurchmesser des Kaffeepads (ohne Siegelrand) nicht kleiner ist als der Durchmesser Dᵢ. Günstig sind insbesondere Durchmesser Dᵢ zwischen 40 und 50 mm, bevorzugt 45 bis 47 mm. Ein solcher Ringsteg 9 wird bevorzugt in Kombination mit einem Überdruckventil verwendet, falls der Fließwiderstand zu hoch wird.

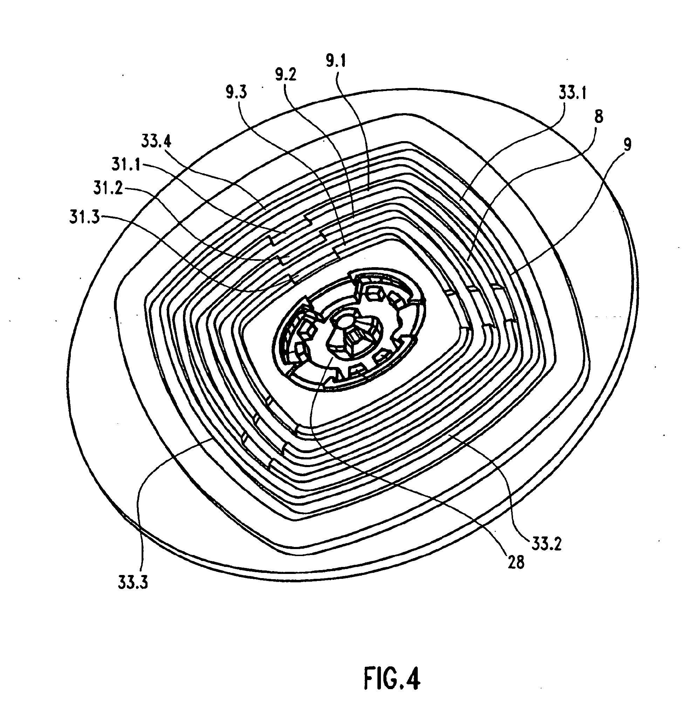

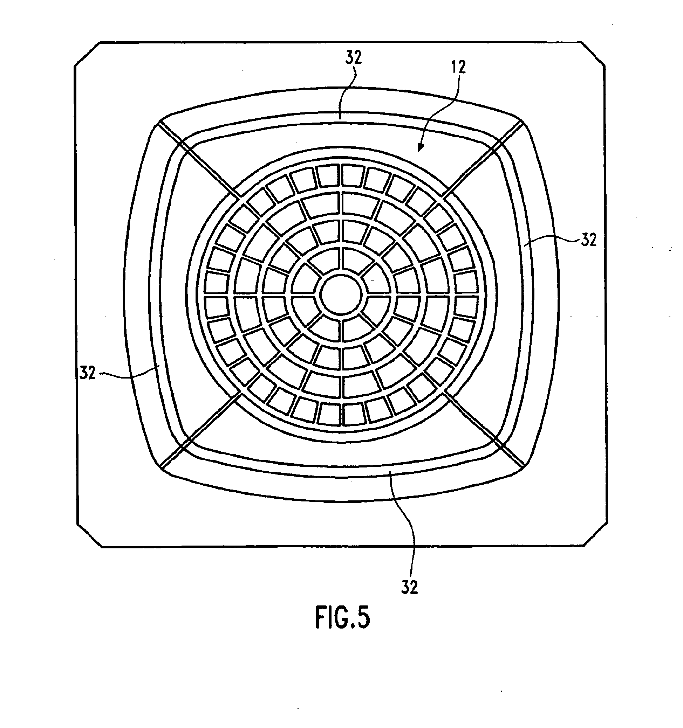

Im Nachfolgenden wird mit Bezug auf die Figuren 4 und 5 ein weiteres Ausführungsbeispiel der Erfindung beschrieben. Identische bzw. im Wesentlichen funktionsgleiche Bauteile und Ausgestaltungen werden mit den gleichen Bezugszeichen gekennzeichnet, hinsichtlich ihrer Beschreibung und Funktions- bzw. Wirkungsweise wird auf obige Beschreibung verwiesen. Im Folgenden werden nur die wesentlichen Unterschiede aufgezeigt.

In dieser Ausführungsform des Brühkammeroberteils 1 sind die Vertiefungen 12, 13 zur Aufnahme von Kaffeepads 6 im Wesentlichen rechteckförmig mit nach außen gewölbten Seiten 32 ausgebildet. Eine derartige Brühvorrichtung ist daher vor allem zur Aufnahme von rechteckförmigen Kaffeepads geeignet.

Die Unterseite 8 des oberen Brühkammerteils 1 weist ebenfalls einen vorstehenden, in die Brühkammer hineinragenden Ringsteg 9 auf. Die Form des Ringsteg 9 folgt im Wesentlichen der Form der Brühkammer. Der Ringsteg 9 läuft daher auch rechteckförmig um und definiert vier konvex nach außen gekrümmte Stegabschnitte 33.1, 33.2, 33.3, 33.4.

Zwischen diesem Ringsteg 9 und dem Brühwassereinlass 28 sind an der Unterseite 8 des oberen Brühkammerteils 1 weitere, zu dem Ringsteg 9 konzentrische, innere Ringstege 9.1, 9.2, 9.3 angeordnet. Die Höhe der Ringstege 9.1, 9.2, 9.3 nimmt ausgehend vom Brühwassereinlass 28 in Richtung des äußeren Ringstegs 9 zu. Die inneren Ringstege 9.1, 9.2, 9.3 weisen Vertiefungen 31.1, 31.2, 31.3 auf um die Federarme der Auswurffeder 23 aufzunehmen, wenn die Brühkammer geschlossen wird. Das Verhältnis zwischen der Tiefe der Vertiefungen 31.1, 31.2, 31.3 und der Höhe der jeweiligen Ringstege 9.1, 9.2, 9.3 nimmt mit zunehmendem Abstand der Ringstege 9.1, 9.2, 9.3 vom Brühwassereinlass 28 ab.

Es ist auch möglich, eine kreisförmige Brühkammer mit mehreren konzentrischen Ringstegen zu gestalten.

Weist das Brühkammeroberteil mehrere konzentrische Ringstege 9.1, 9.2, 9.3 auf, so funktioniert die Brühvorrichtung zumindest teilweise analog zur oben beschriebenen Ausführungsform. Dies trifft vor allem auf das Einlegen des Kaffeepads 6 in die Brühkammer zu. Wird die Brühkammer geschlossen, so federn die Federarme der Auswurfsfeder 23 in die Vertiefungen 31.1, 31.2, 31.3 der inneren konzentrischen Ringstege 9.1, 9.2, 9.3 sowie in die Vertiefungen 27 der Andrückfläche 30 ein. Jeder der Ringstege 9.1, 9.2, 9.3 dringt in die Oberfläche des Kaffeepads 6 ein und bildet somit eine Strömungsbarriere, die mit zunehmendem Umfang des Ringstegs tiefer in das Kaffeepad 6 eindringt. Bereits durch den innersten Ringsteg wird eine seitliche Strömungsbarriere für das aus dem Brühwassereinlass 28 austretende Brühwasser gebildet. Die Höhe dieser Strömungsbarriere nimmt nach außen zu. Bereits durch den ersten umlaufenden Steg wird die Strömung des Brühwassers ins Innere des Kaffeepads 6 umgelenkt. Weiter an der Oberfläche des Kaffeepads 6 strömendes Brühwasser wird durch die nachfolgenden Stege ebenfalls in Innere des Kaffeepads 6 gelenkt. Somit wird ein Bypass des Kaffeepads 6 effektiv vermieden und eine gute Extraktion erreicht.

## Patentansprüche

1. Brühvorrichtung für die Kaffeezubereitung, insbesondere Niederdruckkaffeemaschine, mit einer einen oberen und einen unteren Brühkammerteil (1,11) aufweisenden, öffnen- und schließbaren Brühkammer zum Aufnehmen eines Kaffeepads (6) mit Siegelrand (6.1) und einem Brühwassereinlass (28) am oberen Brühkammerteil (1), wobei die mit einer Kaffeepadoberseite in Berührung bringbare Unterseite (8) des oberen Brühkammerteils (1) und eine von einer ringförmigen am unteren Brühkammerteil (11) umlaufenden Siegelrand-Auflagefläche (14) aufgespannte Ebene bei geschlossener Brühkammer einen senkrechten Abstand (A) voneinander aufweisen, der kleiner ist als 5 mm, **dadurch gekennzeichnet, dass** ein über die Unterseite (8) des oberen Brühkammerteils (1) vorstehender, in die Brühkammer hineinragender Ringsteg (9) vorgesehen ist und der Brühwassereinlass (28) in dem vom Ringsteg (9) umschlossenen Bereich der Unterseite (8) des oberen Brühkammerteils (1) angeordnet ist und der Ringsteg (9) ein über die Unterseite (8) vorstehende Höhe (H) von mindestens 30 % des Abstandes (A) aufweist.

2. Brühvorrichtung nach Anspruch 1, **dadurch gekennzeichnet, dass** der Ringsteg (9) ohne jegliche Unterbrechung umläuft.

3. Brühvorrichtung nach Anspruch 1 oder 2, **dadurch gekennzeichnet, dass** der Ringsteg (9) einen Innendurchmesser (Dᵢ) aufweist, der mindestens 75 % des Innendurchmessers (Dₐ) der Siegelrand-Auflagefläche (14) beträgt.

4. Brühvorrichtung nach einem der Ansprüche 1 bis 3, **dadurch gekennzeichnet, dass** zwischen dem Ringsteg (9) und dem Brühwassereinlass (28) die Unterseite (8) des oberen Brühkammerteils (1) von einer umlaufenden, im Wesentlichen ebenen Andrückfläche (30) zur im Wesentlichen flachen Anlage an ein Kaffeepad (6) ausgebildet ist.

5. Brühvorrichtung nach Anspruch 4, **dadurch gekennzeichnet, dass** die Andrückfläche (30) im Wesentlichen parallel zu der von der ringförmigen am unteren Brühkammerteil (11) umlaufenden Siegelrand-Auflagefläche (14) aufgespannten Ebene angeordnet ist.

6. Brühvorrichtung nach einem der Ansprüche 4 oder 5, **dadurch gekennzeichnet, dass** die Andrückfläche (30) eine Breite (B) von mindestens 20 % des Innendurchmessers (Dᵢ) aufweist.

7. Brühvorrichtung nach einem der Ansprüche 1 bis 6, **dadurch gekennzeichnet, dass** an der Unterseite (8) des oberen Brühkammerteils (1) zwischen dem Ringsteg (9) und dem Brühwassereinlass (28) mindestens ein weiterer zu dem Ringsteg (9) konzentrischer, innerer Ringsteg ausgebildet ist.

8. Brühvorrichtung nach Anspruch 7, **dadurch gekennzeichnet, dass** die über die Unterseite (8) des oberen Brühkammerteils (1) vorstehende Höhe der Ringstege mit zunehmendem Abstand der Ringstege vom Brühwassereinlass (28) zunimmt.

9. Brühvorrichtung nach einem der Ansprüche 7 oder 8, **dadurch gekennzeichnet, dass** zumindest der am weitesten vom Brühwassereinlass (28) entfernte Ringsteg (9) ohne Unterbrechung verläuft.

10. Brühvorrichtung nach einem der Ansprüche 7 bis 9, **dadurch gekennzeichnet, dass** zumindest die inneren Ringstege Vertiefungen aufweisen.

11. Brühvorrichtung nach einem der Ansprüche 7 bis 10, **dadurch gekennzeichnet, dass** das Verhältnis zwischen der Tiefe der Vertiefungen in den Ringstegen und der Höhe der jeweiligen Ringstege mit zunehmendem Abstand der Ringstege vom Brühwassereinlass (28) abnimmt

12. Brühvorrichtung nach einem der vorangehenden Ansprüche, **dadurch gekennzeichnet, dass** die Brühkammer zum Aufnehmen des Kaffeepads (6) im Wesentlichen rechteckförmig mit nach außen gewölbten Seiten ausgestaltet ist.

13. Brühvorrichtung nach einem der vorangegangenen Ansprüche, **dadurch gekennzeichnet, dass** die Ringstege eine Innenseite (10) aufweisen, die im Wesentlichen senkrecht zur Unterseite (8) des oberen Brühkammerteils (1) verläuft.

14. Brühvorrichtung nach einem der vorangegangenen Ansprüche, **dadurch gekennzeichnet, dass** eine Innenkante der Andrückfläche (30) mit einem im Wesentlichen umlaufenden, nach unten über die Unterseite (8) des oberen Brühkammerteils (1) vorstehenden Andrücksteg (29) versehen ist.

15. Brühvorrichtung nach Anspruch 14, **dadurch gekennzeichnet, dass** der Andrücksteg (29) den Brühwassereinlass (28) umgibt

16. Brühvorrichtung nach einem der vorangegangenen Ansprüche, **dadurch gekennzeichnet, dass** sich das obere Brühkammerteil (1) außerhalb des Ringstegs (9) trichterförmig nach außen erweitert.

17. Brühvorrichtung nach einem der vorangegangenen Ansprüche, **dadurch gekennzeichnet, dass** der Bruhwasser einlass (28) als Ringspalt ausgestaltet ist.

18. Brühvorrichtung nach Anspruch 17, **dadurch gekennzeichnet, dass** der obere Brühkammerteil (1) als Bestandteil des Brühwassereinlasses (28) eine topfförmige Vertiefung (21) aufweist, deren mittlerer Bereich zum Ausbilden des Ringspalts (28) von einem scheibenförmigen Befestigungsteil (24) einer Kaffeepad-Auswurffeder (23) abgedeckt ist.

19. Brühvorrichtung nach Anspruch 18, **dadurch gekennzeichnet, dass** eine Einlass-Öffnung (20) für Brühwasser in dem von dem scheibenförmigen Befestigungsteil (24) abgedeckten Teil in die topfförmige Vertiefung (21) mündet

20. Brühvorrichtung nach einem der Ansprüche 1 bis 19 **dadurch gekennzeichnet, dass** die Ringstege im Querschnitt im Wesentlichen sägezahnförmig mit abgerundeter Spitze ausgebildet sind.

21. Brühvorrichtung nach einem der Ansprüche 1 bis 20, **dadurch gekennzeichnet, dass** die Ringstege eine Außenseite mit einer im Wesentlichen abgerundeten Form aufweisen.

22. Brühvorrichtung nach einem der Ansprüche 1 bis 21, **dadurch gekennzeichnet, dass** der Übergang zwischen der Andrückfläche (30) und dem Ringsteg (9) im Wesentlichen scharfkantig ausgebildet ist

23. Brühvorrichtung nach einem der vorangehenden Ansprüche, **dadurch gekennzeichnet, dass** die Strömung des Brühwassers durch den vorstehenden Andrücksteg (29), die flache Andrückfläche (30) und den senkrecht zur Andrückfläche (30) verlaufenden Ringsteg (9) ins Innere des Kaffeepads (6) gerichtet ist.

24. Brühvorrichtung für die Kaffeezubereitung, insbesondere Niederdruckkaffeemaschine, mit einer einen oberen und einen unteren Brühkammerteil (1,11) aufweisenden, öffen- und schließbaren Brühkammer, einem in der Brühkammer aufgenommenen Kaffeepad (6) mit Siegelrand (6.1.) und einem Brühwassereinlass am oberen Brühkammerteil (1), wobei die mit der Kaffeepadoberseite in Berührung bringbare Unterseite (8) des oberen Brühkammerteils (1) und eine von einer ringförmig am unteren Brühkammerteil (11) umlaufenden Siegelrand-Auflagefläche (14) aufgespannte Ebene im geschlossenen Zustand der Brühkammer einen senkrechten Abstand (A) voneinander aufweisen, der kleiner ist als 5 mm, **dadurch gekennzeichnet, dass** ein über die Unterseite (8) des oberen Brühkammerteils (1) vorstehender, in die Brühkammer hineinragender und auf das Kaffeepad (6) aufdrückender Ringsteg (9) vorgesehen ist, der Brühwassereinlass in dem vom Ringsteg (9) umschlossenen Bereich der Unterseite (8) des oberen Brühkammerteils (1) angeordnet ist und der Ringsteg (9) eine über die Unterseite (8) vorstehende Höhe und somit Eindringtiefe in das Kaffeepad (6) von mindestens 30 % des Abstandes (A) aufweist.

## Claims

1. Brewing device for preparing coffee, in particular a low-pressure coffee machine, with an openable and closable brewing chamber, having an upper and a lower brewing chamber part (1, 11), for receiving a coffee pad (6) with a sealing edge (6.1) and a brewing water inlet (28) on the upper brewing chamber part (1), the underside (8), which can be brought into contact with a coffee pad upper side, of the upper brewing chamber part (1) and a plane spanned by an annular sealing edge bearing surface (14) encircling the lower brewing chamber part (11) being, when the brewing chamber is closed, at a perpendicular distance (A) from each other that is less than 5 mm, **characterised in that** an annular web (9) protruding beyond the underside (8) of the upper brewing chamber part (1) and projecting into the brewing chamber is provided and the brewing water inlet (28) is arranged in the region of the underside (8) of the upper brewing chamber part (1) that is surrounded by the annular web (9) and the annular web (9) has a height (H), protruding beyond the underside (8), of at least 30 % of the distance (A).

2. Brewing device according to claim 1, **characterised in that** the annular web (9) encircles without any interruption.

3. Brewing device according to claim 1 or 2, **characterised in that** the annular web (9) has an internal diameter (Dᵢ) which is at least 75 % of the internal diameter (Dₐ) of the sealing edge bearing surface (14).

4. Brewing device according to one of claims 1 to 3, **characterised in that** between the annular web (9) and the brewing water inlet (28) the underside (8) of the upper brewing chamber part (1) is formed by a circumferential , substantially planar contact surface (30) for substantially flat abutment against a coffee pad (6).

5. Brewing device according to claim 4, **characterised in that** the contact surface (30) is arranged substantially parallel to the plane spanned by the annular sealing edge bearing surface (14) encircling the lower brewing chamber part (11).

6. Brewing device according to one of claims 4 or 5, **characterised in that** the contact surface (30) has a width (B) of at least 20 % of the internal diameter (Dᵢ).

7. Brewing device according to one of claims 1 to 6, **characterised in that** at least one further inner annular web, which is concentric with the annular web (9), is formed on the underside (8) of the upper brewing chamber part (1) between the annular web (9) and the brewing water inlet (28).

8. Brewing device according to claim 7, **characterised in that** the height of the annular webs, protruding beyond the underside (8) of the upper brewing chamber part (1), increases with increasing distance of the annular webs from the brewing water inlet (28).

9. Brewing device according to one of claims 7 or 8, **characterised in that** at least the annular web (9) furthest away from the brewing water inlet (28) extends without interruption.

10. Brewing device according to one of claims 7 to 9, **characterised in that** at least the inner annular webs have depressions.

11. Brewing device according to one of claims 7 to 10, **characterised in that** the ratio between the depth of the depressions in the annular webs and the height of the respective annular webs decreases with increasing distance of the annular webs from the brewing water inlet (28).

12. Brewing device according to one of the preceding claims, **characterised in that** the brewing chamber for receiving the coffee pad (6) is substantially rectangular in its configuration with outwardly arched sides.

13. Brewing device according to one of the preceding claims, **characterised in that** the annular webs have an inner side (10) extending substantially perpendicularly to the underside (8) of the upper brewing chamber part (1).

14. Brewing device according to one of the preceding claims, **characterised in that** an inner edge of the contact surface (30) is provided with a substantially circumferential contact web (29) protruding downwardly beyond the underside (8) of the upper brewing chamber part (1).

15. Brewing device according to claim 14, **characterised in that** the contact web (29) surrounds the brewing water inlet (28).

16. Brewing device according to one of the preceding claims, **characterised in that** the upper brewing chamber part (1) widens outward in the manner of a funnel outside the annular web (9).

17. Brewing device according to one of the preceding claims, **characterised in that** the brewing water inlet (28) is configured as an annular gap.

18. Brewing device according to claim 17, **characterised in that** the upper brewing chamber part (1), as a component of the brewing water inlet (28), has a cup-shaped depression (21), the central region of which is covered, for forming the annular gap (28), by a disc-shaped fastening part (24) of a coffee pad ejection spring (23).

19. Brewing device according to claim 18, **characterised in that** an inlet opening (20) for brewing water opens into the cup-shaped depression (21) in the part covered by the disc-shaped fastening part (24).

20. Brewing device according to one of claims 1 to 19, **characterised in that** the annular webs are embodied in cross section substantially in the shape of a saw tooth having a rounded tip.

21. Brewing device according to one of claims 1 to 20, **characterised in that** the annular webs have an outer side having a substantially rounded shape.

22. Brewing device according to one of claims 1 to 21, **characterised in that** the transition between the contact surface (30) and the annular web (9) is embodied in a substantially sharp-edged manner.

23. Brewing device according to one of the preceding claims, **characterised in that** the flow of the brewing water is directed into the interior of the coffee pad (6) by the means of the protruding contact web (29), the flat contact surface (30) and the annular web (9) extending perpendicularly to the contact surface (30).

24. Brewing device for preparing coffee, in particular a low-pressure coffee machine, with an openable and closable brewing chamber having an upper and a lower brewing chamber part (1, 11), a coffee pad (6), which is received in the brewing chamber and has a sealing edge (6.1), and a brewing water inlet (28) on the upper brewing chamber part (1), the underside (8), which can be brought into contact with the coffee pad upper side, of the upper brewing chamber part (1) and a plane spanned by a sealing edge bearing surface (14) annularly encircling the lower brewing chamber part (11) being, when the brewing chamber is closed, at a perpendicular distance (A) from each other that is less than 5 mm, **characterised in that** an annular web (9) protruding beyond the underside (8) of the upper brewing chamber part (1), projecting into the brewing chamber and pressing onto the coffee pad (6) is provided, the brewing water inlet (28) is arranged in the region of the underside (8) of the upper brewing chamber part (1) that is surrounded by the annular web (9) and the annular web (9) has a height, protruding beyond the underside (8), and thus a depth of penetration into the coffee pad (6), of at least 30 % of the distance (A).

## Revendications

1. Dispositif d'infusion pour la préparation de café, en particulier machine à café à basse pression, avec une chambre d'infusion ouvrable et fermable présentant une partie de chambre d'infusion supérieure et une partie de chambre d'infusion inférieure (1,11) pour l'accueil d'une dosette de café (6) avec bord à sceller (6.1) et une entrée d'eau d'infusion (28) à la partie de chambre d'infusion supérieure (1), dans lequel la face inférieure (8) de la partie de chambre d'infusion supérieure (1) qui peut être mise en contact avec une face supérieure de la dosette de café et un plan tendu d'une surface de pose de bord à sceller (14) annulaire tournant à la partie de chambre d'infusion inférieure (11), présentent mutuellement, lorsque la chambre d'infusion est fermée, une distance verticale (A) qui est inférieure à 5 mm, **caractérisé en ce qu'**une âme annulaire (9) avançant au-dessus de la face inférieure (8) de la partie de chambre d'infusion supérieure (1) et pénétrant dans la chambre d'infusion est prévu, que l'entrée d'eau d'infusion (28) est agencée dans la zone enfermée par l'âme annulaire (9) de la face intérieure (8) de la partie de chambre d'infusion supérieure (1) et que l'âme annulaire (9) présente une hauteur (H) dépassant au-dessus de la face inférieure (8) d'au moins 30% de la distance (A).

2. Dispositif d'infusion selon la revendication 1, **caractérisé en ce que** l'âme annulaire (9) tourne sans aucune interruption.

3. Dispositif d'infusion selon la revendication 1 ou 2, **caractérisé en ce que** l'âme annulaire (9) présente un diamètre intérieur (Dᵢ) qui est au moins égal à 75% du diamètre intérieur (Dₐ) de la surface de pose de bord à sceller.

4. Dispositif d'infusion selon l'une des revendications 1 à 3, **caractérisé en ce que**, entre l'âme annulaire (9) et l'entrée d'eau d'infusion (28), la face inférieure (8) de la partie de chambre d'infusion supérieure (1) est formée par une surface de compression (30) tournant et essentiellement plane, pour un appui essentiellement plat contre une dosette de café (6).

5. Dispositif d'infusion selon la revendication 4, **caractérisé en ce que** la surface de compression (30) est essentiellement parallèle au plan tendu de la surface de pose de bord à sceller (14) annulaire tournant à la partie de chambre d'infusion inférieure (11).

6. Dispositif d'infusion selon l'une des revendications 4 ou 5, **caractérisé en ce que** la surface de compression (30) présente une largeur (B) égale à au moins 20% du diamètre intérieur (Dᵢ).

7. Dispositif d'infusion selon l'une des revendications 1 à 6, **caractérisé en ce que** sur la face inférieure (8) de la partie de chambre d'infusion supérieure (1) entre l'âme annulaire (9) et l'entrée de l'eau d'infusion (28), au moins une autre âme annulaire intérieure, concentrique par rapport à l'âme annulaire (9), est formée.

8. Dispositif d'infusion selon la revendication 7, **caractérisé en ce que** la hauteur des âmes annulaires dépassant au-dessus de la face inférieure (8) de la partie de chambre d'infusion supérieure (1) augmente avec l'augmentation de la distance des âmes annulaires par rapport à l'entrée d'eau d'infusion (28).

9. Dispositif d'infusion selon l'une des revendications 7 ou 8, **caractérisé en ce que** au moins l'âme annulaire (9) la plus éloignée de l'entrée d'eau d'infusion (28) tourne sans interruption.

10. Dispositif d'infusion selon l'une des revendications 7 à 9, **caractérisé en ce que** au moins les âmes annulaires intérieures présentent des cavités.

11. Dispositif d'infusion selon l'une des revendications 7 à 10, **caractérisé en ce que** le rapport entre la profondeur des cavités dans les âmes annulaires et la hauteur des différentes âmes annulaires diminue avec l'augmentation de la distance des âmes annulaires par rapport à l'entrée d'eau d'infusion (28).

12. Dispositif d'infusion selon l'une des revendications qui précèdent, **caractérisé en ce que** la chambre d'infusion pour l'accueil de la dosette de café (6) est essentiellement rectangulaire avec des côtés convexes.

13. Dispositif d'infusion selon l'une des revendications qui précèdent, **caractérisé en ce que** les âmes annulaires présentent une face intérieure (10) qui est essentiellement perpendiculaire par rapport à la face inférieure (8) de la partie de chambre d'infusion supérieure (1).

14. Dispositif d'infusion selon l'une des revendications qui précèdent, **caractérisé en ce que** un côté intérieur de la surface de compression (30) est doté d'une âme de compression (29) essentiellement tournante dépassant vers le bas au-dessus de la face inférieure (8) de la partie de chambre d'infusion supérieure (1).

15. Dispositif d'infusion selon la revendication 14, **caractérisé en ce que** l'âme de compression (29) entoure l'entrée d'eau d'infusion (28).

16. Dispositif d'infusion selon l'une des revendications qui précèdent, **caractérisé en ce que** la partie de chambre d'infusion supérieure (1) est élargie vers l'extérieur en forme d'entonnoir à l'extérieur de l'âme annulaire (9).

17. Dispositif d'infusion selon l'une des revendications qui précèdent, **caractérisé en ce que** l'entrée d'eau d'infusion (28) a la forme d'une fente annulaire.

18. Dispositif d'infusion selon la revendication 17, **caractérisé en ce que** la partie de chambre d'infusion supérieure (1) présente, en tant qu'élément de l'entrée d'eau d'infusion (28), un évidement (21) en forme de creuset dont la zone centrale est recouverte pour former la fente annulaire (28) d'un élément de fixation en forme de disque (24) d'un ressort d'éjection de dosette de café (23).

19. Dispositif d'infusion selon la revendication 18, **caractérisé en ce qu'**une ouverture d'entrée (20) pour l'eau d'infusion aboutit dans l'évidement en forme de creuset (21) dans la partie recouverte par l'élément de fixation en forme de disque (24).

20. Dispositif d'infusion selon l'une des revendications 1 à 19, **caractérisé en ce que** les âmes annulaires ont une section essentiellement en dent de scie avec pointe arrondie.

21. Dispositif d'infusion selon l'une des revendications 1 à 20, **caractérisé en ce que** les âmes annulaires présentent une face extérieure avec une forme essentiellement arrondie.

22. Dispositif d'infusion selon l'une des revendications 1 à 21, **caractérisé en ce que** la transition entre la surface de compression (30) et l'âme annulaire (9) a une forme essentiellement anguleuse.

23. Dispositif d'infusion selon l'une des revendications qui précèdent, **caractérisé en ce que** l'écoulement de l'eau d'infusion est dirigé vers l'intérieur de la dosette de café (6) par l'âme de compression dépassante (29), la surface de compression plate (30) et l'âme annulaire (9) verticale par rapport à la surface de compression (30).

24. Dispositif d'infusion pour la préparation de café, en particulier machine à café à basse pression, avec une chambre d'infusion ouvrable et fermable présentant une partie de chambre d'infusion supérieure et une partie de chambre d'infusion inférieure (1,11), une dosette de café (6) avec bord à sceller (6.1) acceuillie dans la chambre d'infusion et une entrée d'eau d'infusion (28) à la partie de la chambre d'infusion supérieure (1), dans lequel la face inférieure (8) de la partie de chambre d'infusion supérieure (1) qui peut être mise en contact avec la face supérieure de la dosette de café et un plan tendu d'une surface de pose de bord à sceller (14) annulaire tournant à la partie de chambre d'infusion inférieure (11), présentent mutuellement, lorsque la chambre d'infusion est fermée, une distance verticale (A) qui est inférieure à 5 mm, **caractérisé en ce qu'**une âme annulaire (9) est prévue qui avance au-dessus de la face inférieure (8) de la partie de chambre d'infusion supérieure (1), qui pénètre dans la chambre d'infusion et qui compresse la dosette de café, que l'entrée d'eau d'infusion est agencée dans la zone enfermée par l'âme annulaire (9) de la face inférieure (8) de la partie de chambre d'infusion supérieure (1) et que l'âme annulaire (9) présente une hauteur dépassant au-dessus de la face intérieure (8) et donc une profondeur d'enfoncement dans la dosette de café (6) d'au moins 30% de la distance (A).
